# EUROPEAN PATENT SPECIFICATION

(11) **EP 2 754 352 B1**
(45) Date of publication and mention of the grant of the patent: **12.12.2018**
(21) Application number: 12830303.9
(22) Date of filing: 07.09.2012
(51) Int. Cl.: A23F 3/16, A23F 3/10, A23F 3/40

(54) **ENZYME-TREATED TEA EXTRACT, AND TEA BEVERAGE**
ENZYMBEHANDELTER TEEEXTRAKT SOWIE TEEGETRÄNK
EXTRAIT DE THÉ TRAITÉ AVEC UNE ENZYME, ET BOISSON AU THÉ

(30) Priority: 08.09.2011 JP 2011195722; 08.09.2011 JP 2011195726
(43) Date of publication of application: 16.07.2014
(73) Proprietor: Suntory Holdings Limited, Kita-ku, Osaka-shi Osaka 530-8203 (JP)
(72) Inventor: YAMASHITA, Tatsunori, Kawasaki-shi Kanagawa 211-0067 (JP); NAGAO, Koji, Kawasaki-shi Kanagawa 211-0067 (JP); KOBAYASHI, Shinichi, Kawasaki-shi Kanagawa 211-0067 (JP); HAYAKAWA, Satoshi, Kawasaki-shi Kanagawa 211-0067 (JP)
(74) Representative: Vossius & Partner Patentanwälte Rechtsanwälte mbB
(86) International application number: PCT/JP2012/072968
(87) International publication number: WO 2013/035860

(56) References cited:
- EP-A1- 0 460 402
- EP-A1- 2 266 415
- WO-A1-2010/087215
- WO-A1-2011/108311
- JP-A- H04 228 028
- JP-A- 2004 113 090
- JP-A- 2009 055 906
- JP-A- 2011 182 673
- JP-B- S39 746
- US-A- 6 024 991

## Description

### TECHNICAL FIELD

The present invention relates to a method for producing a novel tea extract having pleasant *Koku* (rich body) specific to high-class teas, to a high-viscosity tea extract produced by the method, and to a tea beverage packaged in a container, containing the high-viscosity extract.

### BACKGROUND ART

High-class green tea leaves, including *Gyokuro,* are known to have profound umami tastes (delicious tastes) or aromas as well as specific *Koku* that regular *Sencha* (middle grade green tea) does not have. Therefore, a method of enhancing umami tastes or aromas through extraction of effective components from high-class tea leaves, and a method of extracting remaining effective components from the residue, have been disclosed, as follows.

One of the disclosed methods involves a first step of extracting flavors from high-class tea leaves through preparation of a slurry of *Matcha* (powdered green tea) with warm water and processing the slurry in a countercurrent contact apparatus (SCC) to collect the flavors; a second step of preparing a tea extract by subjecting tea leaves to extraction with warm water, removing solid components, treating the extract with charcoal, and filtering out the charcoal; and a third step of mixing the flavors prepared in the first step and the tea extract prepared in the second step, thereby producing a tea extract exhibiting a mild sweet taste of *Matcha* (Patent Literature 1).

Patent Literature 2 discloses a tasty extract which is produced through treatment of *Sencha* with combined enzymes of cellulase, pectinase, and phospholipase, and then extraction. Patent Literature 2 also discloses decomposition of proteins in the tea leaves with a combination of protopectinase and protease to generate amino acids that can reduce bitter and astringent taste of the extract.

Patent Literature 3 discloses a method for producing a soluble tea solid that has a preferred tea flavor and is free from unpleasant perceivable off-odor, the method involving treating residual tea leaves after an extraction process with a cellulase.

Many *Matcha* beverages packaged in a container have been developed which have *Koku* and flavor of *Matcha.* A *Matcha* beverage preferably has a high *Matcha* content to exhibit strong *Matcha* flavor. Such a high *Matcha* content, however, increases the coarse texture or discordant flavor of *Matcha.* Further, this may easily cause precipitation of *Matcha* powder, which may make people misunderstand that the beverage has a quality problem.

A known method of reducing *Matcha* precipitation is to use gellan gum or other stabilizers (Patent Literature 4). Another method is known which involves grinding tea leaves into tea powder and further grinding the tea powder to remove most of the grains of 1 µm or more, to produce a high-quality tea beverage that has a minimized coarse texture or discordant flavor, a clean finish essential for green tea beverages, and mouth feel, *Koku,* and flavor specific to green tea, and that is stable without precipitation or turbidity after long-term storage (Patent Literature 5). Unfortunately, in the method according to Patent Literature 4, the stabilizer may adversely affect the flavor and taste of the beverage. The method in Patent Literature 5 may require an expensive apparatus for grinding the tea powder.
Patent Literature 6 discloses a specific process for the preparation of water-soluble tea extracts from spent tea residues formed during the hot aqueous extraction of tea leaves in the production of water-soluble tea extracts which comprises hydrolysing the said spent tea residues with cellulase in an aqueous medium.

### CITATION LIST

### PATENT LITERATURE

Patent Literature 1: Japanese Unexamined Patent Application Publication No. 2007-167005
Patent Literature 2: Japanese Unexamined Patent Application Publication No. H1-300848
Patent Literature 3: Japanese Patent No. 3157539
Patent Literature 4: Japanese Unexamined Patent Application Publication No. 2001-29053
Patent Literature 5: WO2004/110161
Patent Literature 6: EP O 460 402 A1

### SUMMARY OF INVENTION

### TECHNICAL PROBLEM

Such known methods of enhancing sweet taste or alleviating bitter taste or astringency of an extract from tea leaves or preparing a tea flavor without unpleasant odor can produce insufficient quality of tea extracts that do not have *Koku* specific to extracts from high-class tea leaves. Accordingly, the development of a method for preparing a tea extract having *Koku* specific to high-class tea leaves, starting from regular *Sencha,* has been desired.

An object of the present invention is to provide a tea extract containing high concentrations of components giving *Koku* specific to tea leaves and having pleasant *Koku* specific to high-class tea leaves, and a method for producing the tea extract. Another object of the invention is to provide a tea beverage packaged in a container, which has *Koku* specific to high-class tea leaves.

### SOLUTION TO PROBLEM

The present inventors, who have diligently studied to solve the problems, have found that *Koku* of teas can be enhanced by enzymatically treating tea leaves with a cellulase exhibiting a low level of contamination activity of pectinase or other enzymes and that the tea leaves are preferably to be-subjected to extraction with hot water, prior to the enzyme treatment; and have successfully prepared a novel tea extract having pleasant *Koku*. The present inventors also found that a mixture of *Matcha* and an enzyme-treated tea extract obtainable by treating tea leaves with a cellulase exhibiting a low level of contamination activity of pectinase or other enzymes allows production of a tea beverage being free from coarse texture or discordant flavor of *Matcha,* having *Koku* and flavor specific to *Matcha,* and barely precipitating; and have completed the present invention.

In particular, the present invention relates to the following aspects: 1. A method for producing an enzyme-treated tea extract, comprising subjecting tea leaves to extraction with water or an organic solvent such that an extraction rate of soluble components to the tea extract liquid is 20 to 45%, separating the resulting tea extract liquid, to obtain the tea leaves to be treated with the cellulase, before the treatment of the tea leaves with the cellulase, treating tea leaves with a cellulase, and
subjecting the treated tea leaves to extraction,
wherein a test solution shows a viscosity rate of 80% or more relative to an untreated pectin solution in the following test on the cellulase:
the test solution contains 0.5 wt% pectin, and is prepared with an acetate buffer of pH 5.4; the cellulase is added to the test solution such that the cellulase is 1 wt % relative to the pectin in the solution; a reaction of the cellulase is carried out at 37°C for 16 hours; the resulting solution is treated at 90°C for 10 minutes to deactivate the enzyme; and then viscosity of the deactivated solution is measured with a tuning-fork vibration viscometer at 24.5°C to determine the viscosity rate relative to the untreated pectin solution.
2. The method of item 1, wherein the treatment of the tea leaves with the cellulase is carried out at 35 to 55°C.
3. The method of item 1 or 2, wherein the treatment of the tea leaves with the cellulase is carried out for 30 minutes to 20 hours.
4. The method of any one of items 1 to 3, wherein the treatment of the tea leaves with the cellulase is carried out at a pH of 4 to 6.
5. An enzyme-treated tea extract obtainable by the method of any one of items 1 to 4.
6. The enzyme-treated tea extract of item 5, wherein its viscosity, when its Brix is adjusted to 0.3, is 1.0 mPa·s or higher.
7. A tea beverage packaged in a container, comprising the enzyme-treated tea extract of item 5 or 6.
8. The tea beverage of item 7, further comprising *Matcha.*
9. The tea beverage of item 8, wherein the content of the *Matcha* in the tea beverage is 0.01 to 1.0 wt%.
10. The tea beverage of item 8 or 9, wherein the beverage is obtainable by mixing the *Matcha* directly with the enzyme-treated tea extract, or mixing the *Matcha* in a form of aqueous suspension with the extract.

### ADVANTAGEOUS EFFECTS OF INVENTION

An enzyme-treated tea extract of the present invention would probably have a higher content of a substance generating *Koku* (probably tea pectin) than other conventional extracts. Beverages or foods containing such a tea extract can have enhanced flavors, and *Koku.* A tea beverage packaged in a container, which has pleasant *Koku* specific to *Gyokuro* or other high-class tea leaves can be provided by addition of the enzyme-treated tea extract of the present invention to a tea beverage.

A *Matcha* beverage containing *Matcha* and the enzyme-treated tea extract prepared by the method of the present invention can be a tea beverage which is free from coarse texture or discordant flavor of *Matcha,* has *Koku* and flavor specific to *Matcha,* and barely precipitates.

Without being bound by theory, extraction of tea leaves with hot-water before enzyme treatment can achieve a certain level of removal of enzyme activity inhibitors (e.g., catechins), and would probably increase the efficiency of enzyme treatment and extraction.

### BRIEF DESCRIPTION OF DRAWINGS

FIG. 1 is a graph illustrating the viscosities of pectin solutions treated with different cellulases.
FIG. 2 is a graph illustrating the relation between the pre-extraction rate and the viscosity of each tea extract.
FIG. 3 is a graph illustrating the viscosities of different tea extract liquids.

### DESCRIPTION OF EMBODIMENTS

The present invention will now be described in detail.

### (Tea leaves)

Examples of the preferred tea leaves used in the present invention include, but should not be limited to, steamed non-fermented teas (green teas), such as *Sencha, Bancha, Hojicha, Gyokuro, Kabusecha,* and *Tencha*; non-fermented teas including *Kamairicha,* such as *Ureshinocha, Aoyagicha,* and Chinese teas; semi-fermented teas, such as *Hoshucha, Tekkannon* teas, and oolong teas; and fermented teas, such as black teas, *Awa-bancha,* and pu-erh teas. Non-fermented teas (green teas) and semi-fermented teas for which umami or *Koku* is essential are particularly preferred. The tea leaves may be used without pretreatment or after grinding to improve the extraction efficiency and enzyme reaction efficiency.

### (Cellulase)

Cellulase is an enzyme that hydrolyzes a B-1,4-glycoside bond in a cellulose molecule to generate cellobiose. Most of the cellulases applicable to food products have low purity and contain contaminant enzymes, such as hemicellulase and pectinase. The present inventors have found that the use of a cellulase exhibiting a low level of contaminant pectinase activity leads to efficient production of the desired tea extract. A cellulase exhibiting a low level of contaminant pectinase activity, preferably a cellulase exhibiting substantially no pectinase activity is used. Any enzyme preparation other than cellulases that has cellulase activity and a low level of contaminant pectinase activity can be used. The present invention uses a cellulase having a titer of 50 units/g or more, preferably 100 units/g or more, more preferably 200 units/g or more, and having pectinase activity as less as possible.

The cellulase activity of one unit is defined as follows: one unit is the amount of cellulase that acts on sodium carboxymethyl cellulose at 37°C and causes a reducing capacity corresponding to glucose of 1 µmol per minute during early reaction stage.

The pectinase activity of the cellulase to be used in the present invention should meet the following criteria: when the following test is performed on the cellulase, a test solution obtained as a result of the following treatments shows a relative rate of viscosity relative to viscosity of an untreated pectin solution (viscosity rate), which is 80% or more, preferably 85% or more, more preferably 90% or more, more preferably 95% or more. A higher relative viscosity rate leads to a lower level of pectinase activity.

The testing process: the test solution contains 0.5 wt% pectin, and is prepared with an acetate buffer of pH 5.4; the cellulase is added to the test solution such that the cellulase is 1 wt% relative to the pectin in the solution; a reaction of the cellulase is carried out at 37°C for 16 hours; the resulting solution is treated at 90°C for 10 minutes to deactivate the enzyme; and then viscosity of the deactivated solution is measured with a tuning-fork vibration viscometer at 24.5°C to determine the viscosity rate relative to the untreated pectin solution (the test solution before the treatment with the cellulase).

Examples of the preferred cellulases exhibiting a low level of contaminant pectinase activity include cellulases derived from genus Trichoderma, such as cellulase T "Amano" 4 (Amano Enzyme Inc.) and Sumizyme C (SHINNIHON CHEMICALS Corporation).

### (Production of enzyme-treated tea extract)

To produce the enzyme-treated tea extract of the present invention, tea leaves are treated with any of the above-described cellulases exhibiting a low level of pectinase activity, and the resulting tea leaves are subjected to extraction. The extraction may be performed subsequent to, or concurrent with the cellulase treatment. Preferably, the extraction is performed concurrent with the cellulase treatment.

For the cellulase treatment, pure water is poured on tea leaves, they are sufficiently mixed, and the tea leaves are subjected to enzyme reaction. A cellulase exhibiting a low level of contaminant pectinase activity, preferably a cellulase exhibiting substantially no pectinase activity is used. The enzyme treatment may be performed under any condition that allows the cellulase to act. The volume of pure water to be added is, but should not be limited to, preferably 13-18 times, more preferably 15 times the weight of the tea leaves. The treating temperature is preferably 35-55°C, more preferably 40°C. The treating time is preferably in the range of 30 minutes to 20 hours. The cellulase is added in an amount of preferably 0.1-3.0 wt% of the weight of the tea leaves. The cellulase may be added at once or several times. The pH of the enzyme may be adjusted to the optimum pH, which is generally 4-6, during the cellulase treatment. The pH may be adjusted with acids or alkalis as pH adjustors. Examples of the acids used include inorganic acids, such as hydrochloric acid and phosphoric acid; and organic acids, such as citric acid, acetic acid, and ascorbic acid. Organic acids, especially ascorbic acid are preferably used. Cellulase treatment is finished by heating the reaction solution as necessary to deactivate the cellulase. Such cellulase treatment generally involves the concurrent extraction of an enzyme-treated tea extract.

After the cellulase treatment and extraction, the tea leaves and the tea extract can be separated with a separator, e.g., Screw Decanter (SAITO SEPARATOR LIMITED) by solid-liquid separation to provide an enzyme-treated tea extract. The enzyme-treated tea extract can be optionally concentrated.

The resulting enzyme-treated tea extract can be a tea beverage as it is, and is preferably added to water or a tea beverage as a taste enhancer, by taking advantage of its rich taste. The enzyme-treated tea extract may be used in a liquid state or powdered form prepared by freeze drying or spray drying.

### (Pretreatment for tea leaves)

Before the cellulase treatment of tea leaves, tea leaves are subjected to extraction with water or an organic solvent such as alcohol (in this specification, this treatment is also referred to as "pre-extraction"), and the resulting tea extract liquid is separated. In this specification, the term "tea extract liquid" refers to thus obtained extract liquid.

For extraction, the tea leaves are preferably immersed in an extraction solvent in a weight that is preferably about 15 times or more, more preferably about 15-150 times, more preferably about 30-40 times the weight of the tea leaves, for elution of soluble components. In such a case, the extraction solvent may be heated preliminarily or after the immersion of the tea leaves. The extraction solvent is preferably pure water or a mixture of pure water and any appropriate organic solvent such as ethanol. The hardness of the extraction solvent can be appropriately adjusted by addition of minerals thereto. The extraction temperature is, but should not be limited to, typically 50-95°C; preferably 60-80°C, most preferably 70°C. The conditions for the extraction, including extraction temperature, are determined such that the extraction rate of soluble components in the resulting extract is 20-45%, preferably 30-40% or more, especially 40%. The extraction rate of soluble components is determined by the equation: (Brix of extract)×(weight of extract [g])/(weight of tea leaves [g]). The pre-extraction may be performed once or more. The resulting tea extract liquid may be used as a tea beverage as it is. Alternatively, a mixture of the tea extract liquid and the enzyme-treated tea extract of the invention may be used as a tea beverage.

The cellulase treatment and extraction and the pretreatment of tea leaves may use any additional component that does not impair the advantageous effects of the invention, and should not use pectinase (including pectinase itself and other enzymes exhibiting pectinase activity) in such an amount that the invention may be adversely affected.

### (Viscosity)

The enzyme-treated tea extract manufactured through the method according to the present invention is characterized by its pleasant *Koku* and high viscosity. The enzyme-treated tea extract manufactured through the method according to the present invention generally shows a viscosity of 1.0 mPa·s or higher, preferably 1.10 mPa·s or higher, more preferably 1.15 mPa·s or higher, when the Brix is adjusted to 0.3. It generally shows a viscosity up to 2.0 mPa·s, although no upper limit is defined. The viscosity can be measured with a tuning-fork vibration viscometer, such as type SV-A (available from A & D Company, Limited). The Brix may be adjusted by, for example, addition or removal by distillation of water so as not to cause alteration of non-volatile constituents in the composition.

Without being bound by theory, it is postulated that the *Koku* of the tea beverage of the present invention can be attributed to tea pectin. The tea pectin is acidic polysaccharide present in tea leaves, and is mainly composed of galacturonic acid. The viscosity of the enzyme-treated tea extract, which has a correlation with the density of the pectin, can be used as an indicator of the *Koku* of the enzyme-treated tea extract.

The viscosity, having a correlation with the concentration of the pectin, can also be used as an indicator for selection of an enzyme exhibiting low pectinase activity, as described above.

### (Packaged beverage)

The enzyme-treated tea extract prepared by the method according to the present invention can be provided in the form of tea beverage packaged in a container which has pleasant *Koku,* as it is or as a mixture with a beverage. Examples of the container include glass bottles, PET bottles, and metal cans, which are usually used.

The amounts of the enzyme-treated tea extract in the tea beverage is, should not be limited to, typically 0.01 to 5.0 wt%, 0.1 to 1.0 wt%, and more preferably 0.2 to 0.3 wt%, as calculated for the amount of the extract whose Brix is adjusted to 0.3.

### (Matcha beverages)

The term "*Matcha* beverages" herein refers to tea beverages containing *Matcha.* The enzyme-treated tea extract of the present invention can be mixed with *Matcha* to provide non-sedimentable tea beverages having *Koku* and flavor attributed to original characteristics of the *Matcha,* without coarse texture or discordant flavor of the *Matcha.* Without being bound by theory, it is considered that the mixture containing the extract alleviates adsorption of the *Matcha* on tongues and suppresses unpleasant coarse texture and discordant flavor. It should be understood that such a postulation should not limit the present invention.

The term "*Matcha*" refers to powdered *Tencha* which is one of green tea. Any known *Matcha* can be used in the present invention. The content of *Matcha* in the *Matcha* beverage of the present invention is, should not be limited to, typically 0.01 to 5.0 wt%, 0.01 to 1.0 wt%, or 0.05 to 0.3 wt%, and more preferably 0.1 to 0.2 wt%.

The tea beverage (*Matcha* beverage) of the present invention, which contains the enzyme-treated tea extract and *Matcha,* can be prepared by mixing the enzyme-treated tea extract with *Matcha.* The tea beverage of the present invention can also contain, in addition to these ingredients, a tea extract liquid. For the preparation of a tea beverage containing a tea extract liquid, the mixing of the enzyme-treated tea extract and the *Matcha* may be carried out in the tea extract liquid. Alternatively, after the mixing, the resulting mixture may further be mixed with the tea extract liquid. The *Matcha* may be directly mixed with the enzyme-treated tea extract, or mixed in a form of aqueous suspension with the extract. The aqueous suspension of *Matcha* may be prepared by homogenizing *Matcha* in water using, for example, a homogenizer. Any known means may be used for mixing these ingredients, and there is not limitation.

The tea beverage prepared as described above may contain optional ingredients that are usually formulated in beverages, as appropriate. Examples of the optional ingredient include sugars, sweeteners, acidulants, edible dyes, vitamins, flavors, antioxidants, pH adjusters.

The tea beverage (*Matcha* beverage) of the present invention, which contains the enzyme-treated tea extract and *Matcha,* is suitable for beverages packaged in a container, which are generally preserved for long times, since precipitation of *Matcha* is suppressed.

### EXAMPLES

The present invention will now be described in more detail with reference to the following examples, but should not be limited thereto .
The scope of protection is defined by the appended claims.

### (Reference Example 1)

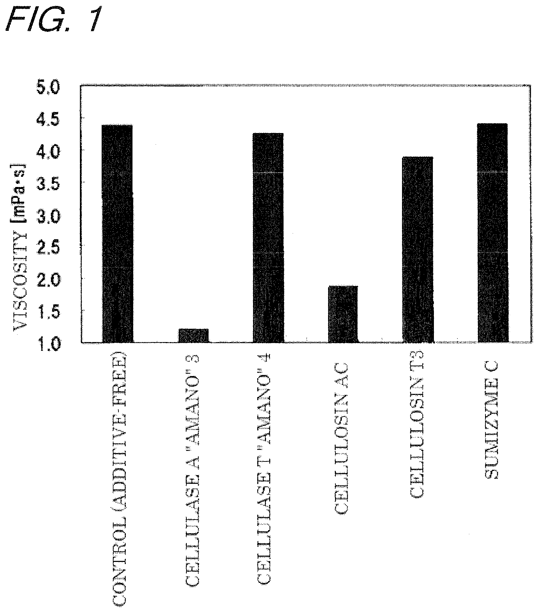

A test solution containing 0.5 wt% pectin (product name: Pectin (sugar- free), available from NACALAI TESQUE, INC.) was prepared with an acetate buffer of pH 5.4. Commercially available cellulase enzymes for food additive use (product name: Cellulase A "Amano" 3 (available from Amano Enzyme Inc.), product name: Cellulase T "Amano" 4 (available from Amano Enzyme Inc.), product name: Cellulosin AC (available from HBI Enzymes Inc.), product name: Cellulosin T3 (available from HBI Enzymes Inc.), and product name: Sumizyme C (available from SHINNIHON CHEMICALS Corporation)) were each added to the aliquot of the test solution such that cellulase was 1 wt% relative to the pectin in the aliquot of the test solution. The reaction was carried out at 37°C for 16 hours, the solution was treated at 90°C for 10 minutes, to deactivate the enzyme. The viscosity is measured with a tuning-fork vibration viscometer SV-A (available from A & D Company, Limited) at 24.5°C. The result, shown in Fig. 1, demonstrates that Cellulase T "Amano" 4 and Sumizyme C (providing a relative viscosity rate 97 % and 100 %, respectively) provides substantially no variation in viscosity after pectin digestion, and exhibits substantially no pectinase activity. Cellulosin T3 (providing a relative viscosity rate 88 %) was also found to be available for the present invention with negligible contamination. The cellulase enzyme used in Examples of the present invention was Cellulase T "Amano" 4. The titer of Cellulase T "Amano" 4 was 280 units/g.

### (Example 1)

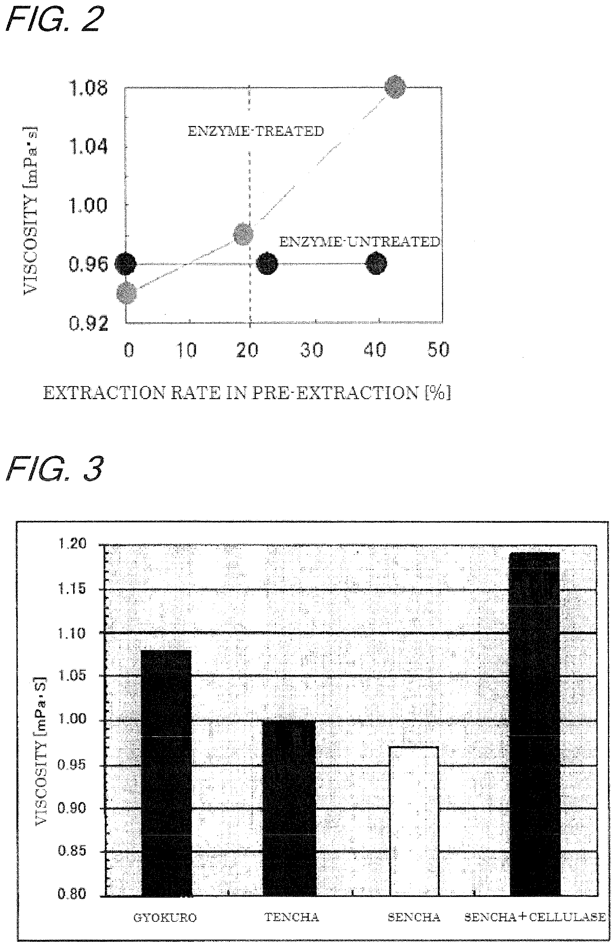

Ground *Sencha* leaves of 5 g were subjected to 3-minuite-extraction with hot water of 500g once (the extraction rate of the soluble components: 20%) or twice (the extraction rate of the soluble components: 40%), and then subjected to solid-liquid separation to obtain separated tea leaves. Cellulase T "Amano" 4 (Amano Enzyme Inc.) in a proportion of 1 wt% of the weight of the tea leaves and pure water in an amount 15 times the weight of the tea leaves were added to each of the two sets of separated tea leaves. L-ascorbic acid in a proportion of about 0.5 wt% of the weight of the tea leaves were added to each of the resulting mixtures to adjust the pH to 4.6. The reaction was carried out at 37°C for 16 hours, and the mixtures were treated at 90°C for 10 minutes to deactivate the enzyme, and to terminate the reaction. The mixtures were subjected to a solid-liquid separation to obtain enzyme-treated tea extracts. The viscosity of the enzyme-treated tea extracts was measured with a tuning-fork vibration viscometer SV-A (A & D Company, Limited). The viscosity was also measured of control extracts obtained through the same processes except that the enzyme was not added. The results, shown in Fig. 2, demonstrate that the tea extracts which were obtained by subjecting the tea leaves to the pre-extraction such that the extraction rate of the soluble components was 20% or higher exhibit a significantly higher viscosity. It is considered that these results demonstrate that the use of a cellulase exhibiting substantially no pectinase activity enables hydrolysis and extraction of tea pectin. Further, it is considered that, if tea leaves are subjected to extraction with hot water before enzyme treatment to remove a certain amount of enzyme activity inhibitors (such as catechins), the efficiency in hydrolysis by a cellulase and extraction of tea pectin will be improved.

### (Example 2)

*Sencha* tea leaves of 5 g were subjected to extraction with hot water such that the extraction rate of the soluble components was 40%, and subjected to solid-liquid separation to obtain separated tea leaves. The separated tea leaves were subjected to the enzyme reaction, as in Example 1, to obtain an enzyme-treated tea extract. Tea extract liquids were prepared from *Gyokuro, Tencha,* and *Sencha* as controls. The enzyme-treated tea extract and the tea extract liquids were each adjusted to have a Brix of 0.3, and were subjected to measurement of the viscosity with a tuning-fork vibration viscometer SV-A (A & D Company, Limited). The results, shown in Fig. 3, demonstrate that the enzyme-treated tea extract of the present invention shows a higher viscosity (1.19 mPa·s) than that of usual tea extract liquids. It is considered that these results illustrate that tea pectin was extracted at a high efficiency.

### (Example 3)

Sensory evaluation was conducted in terms of umami, bitter and astringent taste, and *Koku,* of an enzyme-treated tea extract prepared as in Example 1 and a usual tea extract liquids prepared as in Example 1 except that the enzyme treatment did not take place. The evaluation criteria are shown below.

### [Table 1]

**Table 1 Scoring criteria for umami, bitter and astringent taste, and Koku**

| | |
|---|---|
| Score 5 | Considerably strongly perceived |
| Score 4 | Strongly perceived |
| Score 3 | Perceived |
| Score 2 | Weakly perceived |
| Score 1 | Slightly perceived |
| Score 0 | Not perceived |

The results of the sensory evaluation are shown in Table 2. The enzyme-treated tea extract is superior to the usual extract in *Koku,* thus exhibiting pleasant *Koku.* In terms of umami and bitter and astringent taste, the enzyme-treated tea extract was at the same level as the usual extract.

### [Table 2]

**Table 2 Umami, Bitter and Astringent Taste, and Koku**

| | Umami | Bitter and Astringent Taste | *Koku* |
|---|---|---|---|
| Tea extract liquid | 3 | 3 | 3 |
| Enzyme-treated tea extract | 3 | 3 | 5 |

### (Example 4) Matcha beverage

The enzyme-treated tea extract provided in the present invention was mixed with *Matcha* to produce *Matcha* beverages.

In specific, *Sencha* leaves of 7 g were subjected to extraction with hot water of 200 ml (at 90 °C) for five minutes, and subjected to solid-liquid separation to obtain a tea extract liquid to be used as a beverage base (hereinafter referred to as "base extract liquid"). The *Matcha* was suspended in 80-fold (on weight basis) water, and the suspension was treated with a homogenizer under a pressure of 15 MPa (without centrifugal treatment) to prepare a homogenized *Matcha* suspension. The base extract liquid was mixed with the homogenized *Matcha* suspension such that the contents of the *Matcha* in final tea beverages were 0.01, 0.2, 0.5, and 1.0 wt%, and with an enzyme-treated tea extract prepared as in Example 1 such that the contents of the enzyme-treated tea extract (having a viscosity of 1.19, which was measured at a Brix adjusted to 0.3 with a tuning-fork vibration viscometer SV-A (A & D Company, Limited)) in the final tea beverages were 0.01, 0.2, and 0.5 wt%, as calculated for the amount of the extract whose Brix is adjusted to 0.3. The mixtures were each diluted with water into 1000 ml and the diluted solution was subjected to retort sterilization. The resulting tea beverages were subjected to sensory evaluation in terms of *Koku,* coarse texture, and discordant flavor which were rated in six grades by five panelists. Scoring criteria for the evaluation are shown below.

### [Table 3]

**Table 3 Scoring criteria for Koku**

| | |
|---|---|
| Score 5 | Considerably strongly perceived |
| Score 4 | Strongly perceived |
| Score 3 | Perceived |
| Score 2 | Weakly perceived |
| Score 1 | Slightly perceived |
| Score 0 | Not perceived |

### [Table 4]

**Table 4 Scoring criteria for coarse texture and discordant flavor**

| | |
|---|---|
| Score 5 | Considerably strongly perceived |
| Score 4 | Strongly perceived |
| Score 3 | Perceived |
| Score 2 | Weakly perceived |
| Score 1 | Slightly perceived |
| Score 0 | Not perceived |

The average values of the sensory evaluation are shown in Tables 5 and 6. Addition of the enzyme-treated tea extract increased *Koku* while reducing the coarse texture and discordant flavor. Such a trend becomes more noticeable with an increase in the amount of the enzyme-treated tea extract.

### [Table 5]

**Table 5 Koku**

| | Enzyme-treated tea extract (%) | | |
|---|---|---|---|
| *Matcha* (%) | 0.01 | 0.2 | 0.5 |
| 0.01 | 1.0 | 2.1 | 2.9 |
| 0.2 | 2.3 | 3.3 | 3.7 |
| 0.5 | 3.1 | 4.1 | 4.5 |
| 1.0 | 3.7 | 4.8 | 4.9 |

### [Table 6]

**Table 6 Coarse Texture, Discordant Flavor**

| | Enzyme-treated tea extract (%) | | |
|---|---|---|---|
| *Matcha* (%) | 0.01 | 0.2 | 0.5 |
| 0.01 | 1.8 | 1.3 | 1.1 |
| 0.2 | 3.7 | 2.4 | 2.0 |
| 0.5 | 4.4 | 3.0 | 2.4 |
| 1.0 | 5.0 | 4.0 | 3.3 |

The beverages prepared in Example 4 were left to stand for five minutes, and then subjected to visual evaluation of sedimentation of *Matcha* in four grades. Scoring criteria for the evaluation are shown below.

### [Table 7]

**Table 7 Scoring criteria for sedimentation**

| Sedimentation of *Matcha* after standing for five minutes | |
|---|---|
| +++ | Considerable sedimentation |
| ++ | Sedimentation |
| + | Slight sedimentation |
| - | Non sedimentation |

The results are shown in Table 8. The addition of the enzyme-treated tea extract reduces the sedimentation. Such a trend becomes more noticeable with an increase in the amount of the enzyme-treated tea extract.

### [Table 8]

**Table 8 Sedimentation Level**

| | Enzyme-treated tea extract (%) | | |
|---|---|---|---|
| *Matcha* (%) | 0.01 | 0.2 | 0.5 |
| 0.01 | + | + | - |
| 0.2 | +++ | ++ | + |
| 0.5 | +++ | ++ | ++ |
| 1.0 | +++ | ++ | ++ |

### INDUSTRIAL APPLICABILITY

From the studies described above, an enzyme-treated tea extract has been completed which is postulated to have tea pectin at a high concentration and exhibit pleasant *Koku.*

The enzyme-treated tea extract can be added to, for example, tea beverages packaged in a container, to impart pleasant *Koku* to the beverages. The enzyme-treated tea extract in the form of powder can facilitate the addition of pleasant *Koku* to the tea beverages, and considerably increase viscosity of the tea beverage, and thus, can allow the production of a tea beverage aimed at reducing a risk for aspiration.

## Claims

1. A method for producing an enzyme-treated tea extract, comprising
subjecting tea leaves to extraction with water or an organic solvent such that an extraction rate of soluble components to the tea extract liquid is 20 to 45%,
separating the resulting tea extract liquid, to obtain the tea leaves to be treated with the cellulase, before the treatment of the tea leaves with the cellulase,
treating tea leaves with a cellulase, and
subjecting the treated tea leaves to extraction,
wherein a test solution shows a viscosity rate of 80% or more relative to an untreated pectin solution in the following test on the cellulase:
the test solution contains 0.5 wt% pectin, and is prepared with an acetate buffer of pH 5.4; the cellulase is added to the test solution such that the cellulase is 1 wt% relative to the pectin in the solution; a reaction of the cellulase is carried out at 37°C for 16 hours; the resulting solution is treated at 90°C for 10 minutes to deactivate the enzyme; and then viscosity of the deactivated solution is measured with a tuning-fork vibration viscometer at 24.5°C to determine the viscosity rate relative to the untreated pectin solution.

2. The method of claim 1, wherein the treatment of the tea leaves with the cellulase is carried out at 35 to 55°C.

3. The method of claim 1 or 2, wherein the treatment of the tea leaves with the cellulase is carried out for 30 minutes to 20 hours.

4. The method of any one of claims 1 to 3, wherein the treatment of the tea leaves with the cellulase is carried out at a pH of 4 to 6.

5. An enzyme-treated tea extract obtainable by the method of any one of claims 1 to 4.

6. The enzyme-treated tea extract of claim 5, wherein its viscosity, when its Brix is adjusted to 0.3, is 1.0 mPa·s or higher.

7. A tea beverage packaged in a container, comprising the enzyme-treated tea extract of claim 5 or 6.

8. The tea beverage of claim 7, further comprising *Matcha.*

9. The tea beverage of claim 8, wherein the content of the *Matcha* in the tea beverage is 0.01 to 1.0 wt%.

10. The tea beverage of claim 8 or 9, wherein the beverage is obtainable by mixing the *Matcha* directly with the enzyme-treated tea extract, or mixing the *Matcha* in a form of aqueous suspension with the extract.

## Patentansprüche

1. Ein Verfahren zur Herstellung eines enzymbehandelten Teeextrakts, umfassend
Extraktion von Teeblättern mit Wasser oder einem organischen Lösungsmittel, sodass eine Extraktionsrate von löslichen Komponenten zur Teeextraktionsflüssigkeit 20 bis 45% beträgt,
Abtrennen der so erhaltenen Teeextraktionsflüssigkeit, um die mit der Cellulase zu behandelnden Teeblätter zu erhalten, vor der Behandlung der Teeblätter mit der Cellulase,
Behandeln der Teeblätter mit einer Cellulase, und
Extraktion der behandelten Teeblätter,
wobei eine Testlösung eine Viskositätsrate von 80% oder mehr, bezogen auf eine unbehandelte Pektinlösung, im nachstehenden Test an der Cellulase zeigt:
die Testlösung enthält 0,5 Gew.-% Pektin und wird mit einem Acetatpuffer mit einem pH-Wert von 5,4 hergestellt; die Cellulase der Testlösung wird so zugegeben, dass die Cellulase 1 Gew.-%, bezogen auf das Pektin in der Lösung, beträgt; eine Umsetzung der Cellulase wird bei 37°C für 16 Stunden durchgeführt; die so erhaltene Lösung wird bei 90°C für 10 Minuten behandelt, um das Enzym zu deaktivieren; und im Anschluss wird die Viskosität der deaktivierten Lösung mit einem Schwinggabelvibrationsviskosimeter bei 24,5°C gemessen, um die Viskositätsrate, bezogen auf die unbehandelte Pektinlösung, zu bestimmen.

2. Das Verfahren gemäß Anspruch 1, wobei die Behandlung der Teeblätter mit der Cellulase bei 35 bis 55°C durchgeführt wird.

3. Das Verfahren gemäß Anspruch 1 oder 2, wobei die Behandlung der Teeblätter mit der Cellulase für 30 Minuten bis 20 Stunden durchgeführt wird.

4. Das Verfahren gemäß einem der Ansprüche 1 bis 3, wobei die Behandlung der Teeblätter mit der Cellulase bei einem pH-Wert von 4 bis 6 durchgeführt wird.

5. Ein enzymbehandelter Teeextrakt, erhältlich durch das Verfahren gemäß einem der Ansprüche 1 bis 4.

6. Der enzymbehandelte Teeextrakt gemäß Anspruch 5, wobei dessen Viskosität, wenn dessen Brix auf 0,3 eingestellt ist, 1,0 mPa·s oder höher ist.

7. Ein Teegetränk, welches in einem Behälter verpackt ist, umfassend den enzymbehandelten Teeextrakt gemäß Anspruch 5 oder 6.

8. Das Teegetränkt gemäß Anspruch 7, welches ferner *Matcha* umfasst.

9. Das Teegetränk gemäß Anspruch 8, wobei der Gehalt an *Matcha* in dem Teegetränk 0,01 bis 1,0 Gew.-% beträgt.

10. Das Teegetränk gemäß Anspruch 8 oder 9, wobei das Getränk erhältlich ist durch direktes Mischen des *Matchas* mit dem enzymbehandelten Teeextrakt oder Mischen des *Matchas* in Form einer wässrigen Suspension mit dem Extrakt.

## Revendications

1. Procédé destiné à produire un extrait de thé traité avec une enzyme, comprenant les étapes consistant à :
soumettre des feuilles de thé à une extraction avec de l'eau ou avec un solvant organique de telle sorte que le taux d'extraction des composants solubles en liquide d'extrait de thé soit compris entre 20 % et 45 % ;
séparer le liquide d'extrait de thé qui en résulte, de façon à obtenir les feuilles de thé à traiter avec la cellulase, avant le traitement des feuilles de thé avec la cellulase ;
traiter les feuilles de thé avec une cellulase ; et
soumettre les feuilles de thé traitées à une extraction ;
dans lequel une solution d'essai présente un taux de viscosité égal ou supérieure à 80 % par rapport à une solution de pectine non traitée dans l'essai suivant sur la cellulase :
la solution d'essai contient 0,5 % en poids de pectine, et est préparée avec une solution tampon d'acétate qui présente un pH égal à 5,4 ; la cellulase est ajoutée à la solution d'essai de telle sorte que le poids de la cellulase représente 1 % en poids par rapport à la pectine dans la solution ; une réaction de la cellulase est exécutée à 37 °C pendant 16 heures ; la solution qui en résulte est traitée à 90 °C pendant 10 minutes de façon à désactiver l'enzyme ; et ensuite la viscosité de la solution désactivée est mesurée avec un viscosimètre à vibrations par diapason à 24,5 °C de façon à déterminer le taux de viscosité par rapport à la solution de pectine non traitée.

2. Procédé selon la revendication 1, dans lequel le traitement des feuilles de thé avec la cellulase est exécuté à une température comprise entre 35 °C et 55 °C.

3. Procédé selon la revendication 1 ou 2, dans lequel le traitement des feuilles de thé avec la cellulase est exécuté pendant une durée comprise entre 30 minutes et 20 heures.

4. Procédé selon l'une quelconque des revendications 1 à 3, dans lequel le traitement des feuilles de thé avec la cellulase est exécuté avec un pH compris entre 4 et 6.

5. Extrait de thé traité avec une enzyme, qu'il est possible d'obtenir par le procédé selon l'une quelconque des revendications 1 à 4.

6. Extrait de thé traité avec une enzyme selon la revendication 5, dans lequel sa viscosité, lorsque son Brix est réglé à 0,3, est égale ou supérieure à 1,0 mPa · s.

7. Boisson de thé emballée dans un contenant, comprenant l'extrait de thé traité avec une enzyme selon la revendication 5 ou la revendication 6.

8. Boisson de thé selon la revendication 7, comprenant en outre du *Matcha.*

9. Boisson de thé selon la revendication 8, dans lequel la teneur en *Matcha* dans la boisson de thé, est comprise entre 0,01 % en poids et 1,0 % en poids.

10. Boisson de thé selon la revendication 8 ou la revendication 9, dans lequel la boisson peut être obtenue en mélangeant directement le *Matcha* avec l'extrait de thé traité avec une enzyme, ou en mélangeant le *Matcha* sous la forme d'une suspension aqueuse avec l'extrait.
